# EUROPEAN PATENT APPLICATION

(11) **EP 4 597 724 A1**
(43) Date of publication of application: **06.08.2025**
(21) Application number: 23927910.2
(22) Date of filing: 17.03.2023
(51) Int. Cl.: H01M 50/449, H01M 50/457, H01M 50/491

(54) **SEPARATOR AND PREPARATION METHOD THEREFOR, SECONDARY BATTERY AND ELECTRIC DEVICE**

(71) Applicant: Contemporary Amperex Technology (Hong Kong) Limited, Central (HK)
(72) Inventor: WANG, Zhaoguang, Ningde, Fujian 352100 (CN); YANG, Jianrui, Ningde, Fujian 352100 (CN); OUYANG, Chuying, Ningde, Fujian 352100 (CN); SUN, Chengdong, Ningde, Fujian 352100 (CN); HUANG, Siying, Ningde, Fujian 352100 (CN); MU, Xueying, Ningde, Fujian 352100 (CN); HAN, Chongwang, Ningde, Fujian 352100 (CN); WANG, Yaohui, Ningde, Fujian 352100 (CN)
(74) Representative: Ran, Handong
(86) International application number: PCT/CN2023/082334
(87) International publication number: WO 2024/192591

(57) **Abstract**

Provided in the present application is a separator. The separator comprises : a first porous base film; a second porous base film; and a porous coating, which is provided between the first porous base film and the second porous base film, wherein the porous coating comprises a binder and filler particles, and at least some of the filler particles are embedded into the first porous base film at a depth greater than or equal to 1 µ m and/or at least some of the filler particles are embedded into the second porous base film at a depth greater than or equal to 1 µ m. When the porous coating is located between the first porous base film and the second porous base film, not only can the binder bond the first porous base film and the second porous base film, at least some of the filler particles can also be embedded into the first porous base film and/or the second porous base film at a depth greater than or equal to 1 µ m, such that the bonding force between the porous coating and the first porous base film and/or the second porous base film is increased, and the heat resistance and nailing performance of the separator are effectively improved, thereby improving the reliability of a battery.

## Description

### TECHNICAL FIELD

The present application relates to the technical field of secondary batteries, and in particular, to a separator, a preparation method therefor, a secondary battery, and an electric device.

### BACKGROUND

Secondary batteries are widely used in various types of consumer electronics and electric vehicles due to their excellent characteristics of light weight, no pollution, and no memory effect.

With the continuous development of the new energy industry, users put higher use demands on secondary batteries. It is a problem to be solved at present that secondary batteries and electric devices have better reliability performance.

### SUMMARY

In view of the technical problems existing in the background art, the present application provides a separator and a preparation method therefor, a secondary battery, and an electric device, which aims to improve reliability performance of the secondary battery and the electric device.

In order to achieve the above objective, a first aspect of the present application provides a separator, including a first porous base film; a second porous base film; and a porous coating disposed between the first porous base film and the second porous base film, where the porous coating includes a binder and filler particles, and an embedding depth of at least part of the filler particles in the first porous base film is greater than or equal to 1 µm and/or an embedding depth of at least part of the filler particles in the second porous base film is greater than or equal to 1 µm.

Compared with the prior art, the present application includes at least the following beneficial effects: when the porous coating is located between the first porous base film and the second porous base film, the binder may not only serve to bond the first porous base film and the second porous base film, and moreover, the depth of at least part of the filler particles embedded into the first porous base film and/or the second porous base film is greater than or equal to 1 µm, so that the binding force between the porous coating and the first porous base film and/or the second porous base film is effective improved, the heat resistance performance and nail penetration performance of the separator are effectively improved, and thus, the reliability performance of the battery is improved.

In any embodiment of the present application, a melting point of the first porous base film is higher than a melting point of the second porous base film, and the embedding depth of the filler particles in the first porous base film is greater than the embedding depth of the filler particles in the second porous base film. When the separator satisfies this design, the battery may be further made to have both better reliability performance and cycle performance.

In any embodiment of the present application, the embedding depth of the filler particles in the first porous base film is denoted by D1, the embedding depth of the filler particles in the second porous base film is denoted by D2, and the separator satisfies 1.01≤D1/D2≤3, optionally 1.05≤D1/D2≤2.

In any embodiment of the present application, the embedding depth of the filler particles in the first porous base film is greater than or equal to 1.5 µm, optionally 2.0-4.5 µm, and/or the embedding depth of the filler particles in the second porous base film is greater than or equal to 1.1 µm, optionally 1.1-3.5 µm.

In any embodiment of the present application, an average pore diameter of the first porous base film is 0.1-2 µm, optionally 0.1-0.5 µm; and/or an average pore diameter of the second porous base film is 0.1-2 µm, optionally 0.1-0.35 µm.

In any embodiment of the present application, a volume average particle diameter Dv50 of the filler particles is 0.2-1.2 µm, optionally 0.3-0.8 µm.

In any embodiment of the present application, a ratio of a porosity of the first porous base film to a porosity of the second porous base film is 1.01-3.5, optionally 1.1-2.0.

In any embodiment of the present application, the porosity of the first porous base film is 40-80%, optionally 40-70%; and/or the porosity of the second porous base film is 20-50%, optionally 25-35%.

In any embodiment of the present application, the melting point of the first porous base film is 165°C-380°C, optionally 165°C-330°C, and/or the melting point of the second porous base film is 100°C-250°C, optionally 130°C-210°C.

In any embodiment of the present application, the binder includes one or more of polyacrylate, acrylic acid, carboxymethyl cellulose, a polyvinylidene fluoride-co-trichloroethylene copolymer, polymethyl methacrylate, polyvinyl pyrrolidone, polyvinyl acetate, a polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, and cyanoethyl amylopectin.

In any embodiment of the present application, the filler particles include at least one of inorganic particles, organic particles, and an organic-metal framework material.

In any embodiment of the present application, the separator satisfies at least one of the following items (1) to (3):
(1) a peel strength between the first porous base film and the porous coating is ≥5 N/m, optionally 5.5-10 N/m;
(2) a horizontal heat shrinkage ratio of the separator at 250°C for 1 h is ≤1.5%, optionally ≤1.0%; and
(3) a longitudinal heat shrinkage ratio of the separator at 250°C for 1 h is ≤1.5%, optionally ≤1.0%.

A second aspect of the present application provides a method for preparing a separator, including: providing a first porous base film and a second porous base film; preparing a porous coating slurry, which includes a binder and filler particles, and disposing the porous coating slurry on a surface of the first porous base film and/or a surface of the second porous base film to form a porous coating; and compounding the first porous base film and the second porous base film by a lamination process, so that the porous coating is disposed between the first porous base film and the second porous base film to obtain the separator, wherein an embedding depth of at least part of the filler particles in the first porous base film is greater than or equal to 1 µm and/or an embedding depth of at least part of the filler particles in the second porous base film is greater than or equal to 1 µm.

In any embodiment of the present application, in the lamination process, a lamination temperature is 30-70°C, optionally 35-50°C; and/or a lamination pressure is 2-30N, optionally 5-20N.

A third aspect of the present application provides a secondary battery, including the separator according to the first aspect of the present application or the separator prepared by the method for preparing a separator according to the second aspect of the present application.

In any embodiment of the present application, the secondary battery further includes an anode plate and a cathode plate, where the separator is disposed between the anode plate and the cathode plate.

A fourth aspect of the present application provides an electric device, including the secondary battery according to the third aspect of the present application.

Since the device provided by the present application includes the secondary battery provided by the present application, it at least has the advantages as same as those of the secondary battery.

### DESCRIPTION OF DRAWINGS

In order to describe the technical solutions of the present application more clearly, the accompanying drawings used in the present application will be briefly described below. It is clear that the accompanying drawings described below show only some implementations of the present application, and a person of ordinary skill in the art may further derive other accompanying drawings from the accompanying drawings without creative efforts.
FIG. 1 is a schematic structural diagram of an embodiment of a separator provided by the present application;
FIG. 2 is a schematic diagram of an embodiment of a secondary battery;
FIG. 3 is an exploded view of FIG. 2;
FIG. 4 is a schematic diagram of an embodiment of a battery module;
FIG. 5 is a schematic diagram of an embodiment of a battery pack;
FIG. 6 is an exploded view of FIG. 5; and
FIG. 7 is a schematic diagram of an embodiment of a secondary battery used as a device for a power supply.

### DESCRIPTION OF EMBODIMENTS

The present application will be further described below with reference to specific embodiments. It should be understood that these specific embodiments are merely illustrative of the application and are not intended to limit the scope of the present application.

For brevity, only some numerical ranges are specifically disclosed herein. However, any lower limit may be combined with any upper limit to form a range not explicitly recorded, and any lower limit may be combined with other lower limits to form a range not explicitly recorded, and likewise any upper limit may be combined with any other upper limit to form a range not explicitly recorded. In addition, each individually disclosed point or individual value may itself be combined as a lower limit or an upper limit with any other point or individual value, or with other lower or upper limits, to form a range not explicitly recorded.

In the description herein, the term "or" is inclusive, unless otherwise specified. That is to say, the phrase "A or B" means "A, B, or both A and B". More specifically, the condition "A or B" is satisfied by either A being true (or present) and B being false (or absent), A being false (or absent) and B being true (or present), or both A and B being true (or present).

In the description herein, it should be noted that, unless otherwise specified, "above" and "below" are inclusive of the number, and "several" of "one or several" means two or more.

Unless otherwise specified, the terms used in the present application have the meanings commonly understood by those skilled in the art. Unless otherwise specified, the numerical values of each parameter mentioned in the present application may be measured by various measuring methods commonly used in the art, for example, according to the methods given in the embodiments of the present application.

### Secondary battery

A secondary battery refers to a battery that may be used continuously by activating an active material by means of charging after discharging the battery.

Under normal conditions, the secondary battery includes an anode plate, a cathode plate, a separator, and an electrolyte. During charging and discharging of a battery, active ions are intercalated and deintercalated back and forth between the positive electrode sheet and the negative electrode sheet. The separator is disposed between the anode plate and the cathode plate to play a separating role. The electrolyte functions to conduct ions between the anode plate and the cathode plate.

### [Separator]

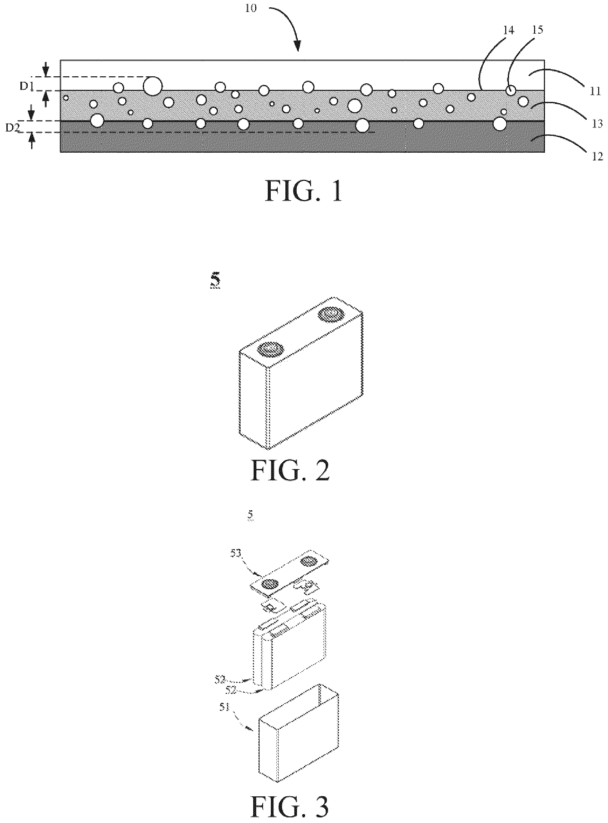

Referring to FIG. 1, an embodiment of the present application provides a separator 10, including a first porous base film 11, a second porous base film 12; and a porous coating 13, disposed between the first porous base film 11 and the second porous base film 12, where the porous coating 13 includes a binder 14 and filler particles 15, and an embedding depth of at least part of the filler particles 15 in the first porous base film 11 is greater than or equal to 1 µm and/or an embedding depth of at least part of the filler particles 15 in the second porous base film 12 is greater than or equal to 1 µm. a is a first embedding depth and b is a second embedding depth.

Undesired to be bound by any theory, the separator of a specific structure of the present application may effectively improve heat resistance, but the first porous base film and the second porous base film have a problem that delamination of the base film easily occurs during use of the battery. The inventors have found through extensive research that, when the depth of at least part of the filler particles 15 embedded into the first porous base film 11 and/or the first porous base film 12 is greater than or equal to 1 µm, the binding force between the porous coating 13 and the first porous base film 11 and/or the second porous base film 12 is effectively increased, thereby improving the heat resistance of the battery, and moreover, the deeper inter-embedding structure may make the separator have a denser material layer, thereby increasing the physical puncture resistance of the separator, and thus, further improving the reliability performance of the battery.

Through further studies, the inventors have found that the performance of the battery may be further improved if the separator optionally satisfies one or more of the following designs.

In some embodiments, a melting point of the first porous base film 11 is higher than a melting point of the second porous base film 12, and the embedding depth of the filler particles 15 in the first porous base film 11 is greater than the embedding depth of the filler particles 15 in the second porous base film 12. When this design is satisfied, the separator may achieve both high tensile strength and local material density to effectively block lithium dendrites, thereby reducing the risk of the separator being punctured during battery cycling, and thus, further improving the reliability performance of the battery.

In any embodiment of the present application, the embedding depth of the filler particles 15 in the porous base film with high melting point is denoted by D1, the embedding depth of the filler particles 15 in the porous base film with lower melting point is denoted by D2, and the separator satisfies 1.01≤D1/D2≤3, optionally 1.05≤D1/D2≤2.

D1/D2 may also be 1.01, 1.05, 1.3, 1.4, 1.45, 1.5, 1.83, 1.9, 2, 2.3, 2.4, 2.5, 2.53, 2.7, 2.84, 2.9, 3, and the like or a range consisting of any two of the above values, for example, 1.01-1.3, 1.05-1.5, 1.83-2, 2.3-2.53, 2.7-2.84, 2.9-3 and the like. In some embodiments, D1/D2 may also satisfy 1.05≤D1/D2≤2.

In any embodiment of the present application, the embedding depth of the filler particles 15 in the first porous base film 11 is greater than or equal to 1.5 µm, optionally 2.0-4.5 µm, and/or the embedding depth of the filler particles 15 in the second porous base film 12 is greater than or equal to 1.1 µm, optionally 1.1-3.5 µm.

The embedding depth of the filler particles 15 in the first porous base film 11 may be 1.5 µm, 1.6 µm, 1.65 µm, 2 µm, 2.2 µm, 2.3 µm, 2.5 µm, 2.7 µm, 3 µm, 3.5 µm, 4 µm, 4.5 µm, 5 µm, 6 µm, 7 µm, and the like. or a range consisting of any two of the above values, for example, 1.5-1.65 µm, 2 -2.5 µm, 2-3 µm, 2.5-3.5 µm, 3.5 -4.5 µm, 2-4.5µ m, and the like. In some embodiments, the embedding depth of the filler particles 15 in the first porous base film 11 may be 2.0-4.5 µm.

The embedding depth of the filler particles 15 in the first porous base film 12 may be 1.1 µm, 1.25 µm, 1.3 µm, 1.4 µm, 1.6 µm, 1.8 µm, 2 µm, 2.3 µm, 2.6 µm, 2.95 µm, 3 µm, 3.2 µm, 3.3 µm, 3.5 µm, 4 µm, 5 µm, 6 µm, 7 µm, and the like or a range consisting of any two of the above values, for example, 1.1-1.25 µm, 1.4-2 µm, 1.8-2.95 µm, 2-to 3 µm, 1.1-3.5 µm, and the like. In some embodiments, the embedding depth of the filler particles 15 in the first porous base film 12 may be 1.1-3.5 µm.

The embedding depth of the filler particles in the porous base film is the meaning known in the art and may be tested by using known devices and methods in the art. For example, the embedding depth may be tested by using a scanning electron microscope (for example, ZEISS Sigma 300). As an example, the embedding depth may be tested according to the following steps: the separator is cut into a sample to be tested of a certain size (for example, 6 mm×6 mm) first, the sample to be tested is sandwiched between two electrically and thermally conductive sheets (for example, copper foils), the sample to be tested and the sheets may be adhered and fixed with an adhesive (for example, a double-sided tape), the sample to be tested is pressed by a flat iron block of a certain mass (for example, about 400 g) for a certain time (for example, 1 h), so that the gap between the sample to be tested and the copper foil is as small as possible, and then the edge of the sample to be tested is cut with a pair of scissors and is adhered to a sample stage with an electrically conductive adhesive, and the sample slightly protrudes from the edge of the sample stage. The sample stage is then loaded into a sample holder and locked in place, an argon ion section polisher (for example, IB-19500CP) is powered on and vacuumizing is performed (for example, 10-4 Pa), an argon flow (for example, 0.15 MPa) and a voltage (for example, 8 KV) and polishing time (for example, 2 h) are set, the sample stage is adjusted to a rocking mode to start polishing, and after the polishing is finished, an ion polishing profile (CP) picture of the sample to be tested is obtained using a scanning electron microscope (for example, ZEISS Sigma 300), and the thickness data of the base film and the coating are respectively measured; and an EDS mapping mode is selected, and the distribution depth of the element (for example, aluminum element) contained in the filler particles in the base film is measured as the embedding depth. For example, by taking an intermediate point of curve distribution as a boundary, the thickness of the coating may be substituted, the values of the thickness of the coating on two sides of the middle line are removed, which are the initial values, and further extended until the content of the element (for example, aluminum element) contained in the filler particles is 0, and the value is read, which is the embedding depth.

In any embodiment of the present application, an average pore diameter of the first porous base film is 0.1-2 µm, optionally 0.1-0.5 µm; and/or an average pore diameter of the second porous base film is 0.1-2 µm, optionally 0.1-0.35 µm.

An average pore diameter of the first porous base film 11 may be 0.1-2 µm, for example, 0.1 µm, 0.12 µm, 0.2 µm, 0.4 µm, 0.5 µm, 0.65 µm, 0.85 µm, 1 µm, 1.2 µm, 1.35 µm, 1.5 µm, 1.75 µm, 1.85 µm, 2 µ m, and the like, or a range consisting of any two of the above values, for example, 0.1-0.2 µm, 0.4-0.85 µm, 1 -1.35 µm, 1.5-1.75 µm, 1.85-2 µm, and the like. In some embodiments, the average pore diameter of the first porous base film 11 may be 0.1-0.5 µm.

An average pore diameter of the second porous base film 12 may be 0.1-2 µm, for example, 0.1 µm, 0.15 µm, 0.2 µm, 0.3 µm, 0.5 µm, 0.75 µm, 0.85 µm, 1 µm, 1.2 µm, 1.5 µm, 1.75 µm, 1.85 µm, 2 µm, and the like, or a range consisting of any two of the above values, for example, 0.1-0.2 µm, 0.1-0.35 µm, 0.3-0.75 µm, 0.85-1.2 µm, 1.5-1.75 µm, 1.85-2 µm, and the like. In some embodiments, the average pore diameter of the second porous base film 12 may be 0.1-0.35 µm.

When the average pore diameter of the first porous base film and the average pore diameter of the second porous base film satisfy the above conditions, the separator may have good tensile strength while satisfying the embedding depth of the present application.

In any embodiment of the present application, the average pore diameter of the porous base film is measured using a mercury porosimeter with reference to GB/T 21650.1-2008.

In any embodiment of the present application, the volume average particle diameter Dv50 of the filler particles 15 is 0.2-1.2 µm, optionally 0.3-0.8 µm.

The volume average particle diameter Dv50 of the filler particles 15 may be 0.2-1.2 µm, for example 0.2 µm, 0.35 µm, 0.4 µm, 0.5 µm, 0.65 µm, 0.75 µm, 0.85 µm, 0.9 µm, 1 µm, 1.2 µm, and the like, or a range consisting of any two of the above values, for example, 0.2-0.35 µm, 0.4-0.65 µm, 0.3-0.8 µm, 0.5-0.85 µm, 0.75-1 µm, and the like. In some embodiments, the volume average particle diameter Dv50 of the filler particles 15 may be 0.3-0.8 µm.

The volume average particle size Dv50 of the filler particles is meaning known in the art, and represents the particle size at which the cumulative volume distribution percentage of the material reaches 50%, and may be tested by methods known in the art. It may be determined, for example, with reference to the standard GB/T 19077-2016, using a laser particle size analyzer (e.g. Malvern Master Size 3000).

In any embodiment of the present application, the ratio of the porosity of the first porous base film 11 to the porosity of the first porous base film 12 is from 1.01-3.5, optionally 1.1-2.0.

The ratio of the porosity of the first porous base film 11 to the porosity of the first porous base film 12 may be 1.01, 1.5, 1.8, 2, 2.15, 2.5, 2.87, 3, 3.01, 3.15, 3.2, 3.25, 3.4, 3.5 and the like, or a range consisting of any two of the above values, for example, 1.01-1.8, 2-2.5, 2.87-3, 3.01-3.2, 3.25-3.5, and the like.

When the ratio of the porosity of the first porous base film 11 to the porosity of the first porous base film 12 satisfies the above condition, the separator may have good tensile strength while satisfying the embedding depth of the present application.

In any embodiment of the present application, the porosity of the first porous base film 11 is 40-80%, optionally 40-70%; and/or the porosity of the first porous base film 12 is 20-50%, optionally 25-35%.

The porosity of the first porous base film 11 may be 40%, 50%, 55%, 58%, 60%, 65%, 70%, 72%, 73.5%, 75%, 80%, and the like, or a range consisting of any two of the above values, for example, 40-50%, 55-58%, 60-70%, 72-73.5%, 75-80%, and the like. In some embodiments, the porosity of the first porous base film 11 may be 40-70%.

The porosity of the first porous base film 12 may be 20%, 25%, 28.5%, 30%, 32%, 40%, 45%, 48%, 50%, and the like, or a range consisting of any two of the above values, for example, 20-25%, 25-35%, 30-40%, 45-50%, and the like. In some embodiments, the porosity of the first porous base film 12 may be 25-35%.

The porosity of the base film is meaning known in the art and may be tested using methods known in the art. For example, the porosity of the base film may be tested using a mercury porosimeter, with reference to GB/T 21650.1-2008.

In any embodiment of the present application, a melting point of the first porous base film 11 is 165°C-380°C, optionally 165°C-330 °C; and/or a melting point of the first porous base film 12 is 100°C-250°C, optionally 130-210 °C.

The melting point of the first porous base film 11 may be 165°C, 169°C, 170°C, 176°C, 180°C, 212°C, 235°C, 256°C, 264°C, 280°C, 315°C, 330°C, 355°C, 360°C, 365°C, 380°C, and the like, or a range consisting of any two of the above values, for example, 165°-176°C, 180°-212°C, 235°-280°C, 315°-330°C, 355°-360°C, 365°-380°, and the like. In some embodiments, the melting point of the first porous base film 11 may be 165°C-330°C.

The melting point of the first porous base film 12 is 100°C, 110°C, 125°C, 135°C, 141°C, 145°C, 150°C, 155°C, 160°C, 170°C, 185°C, 195°C, 200°C, 210°C, 220°C, 230°C, 240°C, 250°C, and the like, or a range consisting of any two of the above values, for example, 100°C-125°C, 135°C-141°C, 145°C-155°C, 160°C-185°C, 195°C-210°C, 130°C-210°C, 220°C-250°, and the like. In some embodiments, the melting point of the first porous base film 12 may be 130°C-210°C.

The melting points of the first porous base film and the second porous base film may be tested using equipment and methods known in the art. For example, the melting point may be tested using differential scanning calorimetry. Reference may be made in particular to the standard GB/T 19466.3-2004. As an example, the melting point may be tested by the following method: 4-6 mg of the sample to be tested is taken and placed in a sample chamber of a differential scanning calorimeter at a temperature from 25°C to 400°C with a temperature rise rate of 10°C/min, to obtain a melting heat adsorption curve of the sample, and the temperature corresponding to the peak of the curve is the melting point of the sample.

In any embodiment of the present application, the binder 14 includes one or more of polyacrylate, acrylic, carboxymethyl cellulose, polyvinylidene fluoride-co-trichloroethylene copolymer, polymethyl methacrylate, polyvinyl pyrrolidone, polyvinyl acetate, polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, and cyanoethyl amylopectin.

The first porous base film 11 and the second porous base film 12 may be directly compounded by way of hot pressing, and in the process of compounding by hot pressing, if the temperature is too high, the porosity is small and the air permeability is poor, and if the temperature is too low, the first porous base film 11 and the second porous base film 12 are not firmly bonded, and therefore, it is necessary to adjust a suitable hot pressing temperature. Optionally, the hot pressing temperature is 20°C-50°C.

When the porous coating 13 is disposed between the first porous base film 11 and the first porous base film 12, and the binder 14 in the porous coating 13 includes the above components, the stability of the secondary battery can be improved.

In any embodiment of the present application, the filler particles 15 include at least one of inorganic particles, organic particles, and an organic-metal framework material.

Optionally, the inorganic particles include one or more of inorganic particles having a dielectric constant greater than or equal to 5, inorganic particles having ion conductivity but not storing ions, and inorganic particles capable of performing an electrochemical reaction.

Optionally, the inorganic particles having a dielectric constant greater than or equal to 5 may include at least one of boehmite, alumina, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb (Zr, Ti)O₃ (abbreviated as PZT), Pb₁₋ₘLaₙZr₁₋ₙTiₙO₃ (abbreviated as PLZT, 0<m<1, 0<n<1), Pb (Mg₃Nb_{2/3})O₃-PbTiO₃ (abbreviated as PMN-PT), and their respective modified inorganic particles. Optionally, each inorganic particle may be modified by chemical modification and/or physical modification. The chemical modification means includes coupling agent modification (for example, using a silane coupling agent, a titanate coupling agent, and the like), surfactant modification, polymer graft modification, and the like. The physical modification means may be mechanical force dispersion, ultrasonic dispersion, high-energy treatment, and the like. Agglomeration of the inorganic particles can be reduced by the modification treatment, thereby enabling the adhesive layer to have a more stable and uniform structure; and in addition, by selecting a coupling agent, a surfactant, or a polymer having a specific functional group to modify the inorganic particles, it also contributes to improving wetting and retention properties of the adhesive layer to the electrolyte and improving adhesion of the adhesive layer to the first porous base film and the second porous base film.

Optionally, the inorganic particles having ion conductivity but not storing ions may include at least one of Li₃PO₄, lithium titanium phosphate Liₓ₁Ti_{y1}(PO₄)₃, lithium titanium aluminum phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3} and P₂S₅ type glass Liₓ₈P_{y8}S_{z4}, 0<x1<2, 0 <y1<3, 0 <x2<2, 0 <y2<1, 0 <z1<3, 0<x3<4, 0 <y3<130<x4<2, 0 <y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, 0<z4<7. Therefore, the ion conductivity of the separator can be further improved.

Optionally, the inorganic particles capable of performing an electrochemical reaction may include at least one of a lithium-containing transition metal oxide, a lithium-containing phosphate, a carbon-based material, a silicon-based material, a tin-based material, and a lithium titanium compound.

Optionally, the organic particles may include one or more of polycarbonate, polythiophene, polypyridine, polystyrene, polyacrylic wax, polyethylene, polypropylene, cellulose, cellulose modifiers (for example, carboxymethyl cellulose), melamine resin, phenol resin, polyester (for example, polyethylene terephthalate, polyethylene naphthalate, polybutylene terephthalate), silicone resin, polyimide, polyamideimide, polyaramid, polyphenylene sulfide, polysulfone, polyethersulfone, polyetheretherketone, polyaryletherketone, a copolymer of butyl acrylate and ethyl methacrylate (for example, a cross-linked polymer of butyl acrylate and ethyl methacrylate).

Optionally, the organic-metal framework material may include one or more of a nitrogencontaining heterocyclic ligand building structure, an organic carboxylic ligand building structure, and a nitrogen-oxygen mixed ligand building structure.

In some embodiments, the content of the binder may be greater than or equal to 10%, optionally 10-30%, based on the total weight of the adhesive layer.

In some embodiments, the content of the filler may be less than or equal to 90%, optionally 40-90%, 60-80%, based on the total weight of the adhesive layer.

In some embodiments, the coating may also include a dispersant, such as carboxymethyl cellulose, whereby the viscosity of the coating slurry may be adjusted, improving the quality and uniformity of the coating.

In some embodiments, the content of the dispersant may be less than or equal to 25%, optionally less than or equal to 20%, based on the total weight of the adhesive layer.

When the porous coating 13 is disposed between the first porous base film 11 and the first porous base film 12, and the filler particles 15 in the porous coating 13 include at least one of the above inorganic particles, organic particles, and organic-metal framework material, the filler particles 15 in the porous coating 13 may further improve the heat resistance and physical properties of the separator 10, so that the stability of the secondary battery may be improved.

In any embodiment of the present application, the separator 10 satisfies at least one of the following items (1) to (3):
(1) a peel strength between the first porous base film and the porous coating is ≥5 N/m, optionally 5.5-10 N/m;
(2) a horizontal heat shrinkage ratio of the separator at 250°C for 1 h is ≤1.5%, optionally ≤1.0%; and
(3) a longitudinal heat shrinkage ratio of the separator at 250°C for 1 h is ≤1.5%, optionally ≤1.0%.

When at least one of the above items (1) to (3) of the separator 10 satisfies the given range, the separator 10 has good heat resistance and physical properties, so that the stability of the secondary battery may be improved.

The horizontal heat shrinkage ratio and the longitudinal heat shrinkage ratio of the separator 10 each have meaning known in the art, and may be measured by methods known in the art. For example, sample preparation: the above prepared separator is punched with a punch into a sample having a width of 50 mm and a length of 100 mm, five parallel samples are placed on A4 paper and fixed, and the A4 paper containing the sample is placed on corrugated paper having a thickness of 1-5 mm.

Sample testing: A4 paper placed on the corrugated paper is placed in a blast oven with the blast oven temperature set to 250°C. After the temperature reaches the set temperature and is stabilized for 30 min, timing is started, and after the set time (1 h in the present application) is reached, the length and width of the separator are measured, and the values are marked as a and b, respectively.

Calculation of heat shrinkage ratios: transverse heat shrinkage ratio (TD)=(50-b)/50]×100%, longitudinal heat shrinkage ratio in direction (TD)=[(50-a)/50]×100%, and an average value of 5 parallel samples is taken as the test result.

In any embodiment of the present application, a method for preparing a separator includes: providing a first porous base film and a second porous base film; preparing a porous coating slurry, which comprises a binder and filler particles, and disposing the porous coating slurry on a surface of the first porous base film and/or a surface of the second porous base film to form a porous coating; and compounding the first porous base film and the second porous base film by a lamination process, so that the porous coating is disposed between the first porous base film and the second porous base film to obtain the separator, wherein an embedding depth of at least part of the filler particles in the first porous base film is greater than or equal to 1 µm and/or an embedding depth of at least part of the filler particles in the second porous base film is greater than or equal to 1 µm.

In any embodiment of the present application, in the lamination process, a lamination temperature is 30-70°C, optionally 35-50°C; and/or a lamination pressure is 2-30N, optionally 5-20N.

In the lamination process, the lamination temperature may be 30°C, 35°C, 40°C, 45°C, 50°C, 55°C, 60°C, 65°C, 70°C, and the like, or a range consisting of any two of the above values, for example, 30°C-40°C, 40°C-50°C, 35°C-50°C, 50°C-60°, and the like. In some embodiments, the lamination temperature is 35°C-50°C.

The lamination pressure may be 2N, 5N, 7N, 10N, 12N, 15N, 17N, 20N, 23N, 55N, 27N, 30N, and the like, or a range consisting of any two of the above values, for example, 2 -10N, 5-20N, 10 -25N, 15-30N, and the like. In some embodiments, the lamination pressure is 5-20N.

By controlling the temperature and pressure in the lamination process within the above ranges, the embedding depth of at least part of the filler particles in the first porous base film is greater than or equal to 1 µ m and/or the embedding depth of at least part of the filler particles in the second porous base film is greater than or equal to 1 µ m, so that the binding force between the porous coating and the first porous base film and the second porous base film is effectively increased, the heat resistance of the separator is improved, and thus, the reliable performance of the secondary battery is improved.

Unless otherwise specified, each raw material used in the separator (for example, the first porous base film, the second porous base film, the binder, the filler, and the like) may be commercially available.

### [Anode plate]

In the secondary battery, the anode plate generally includes an anode current collector and an anode film layer disposed on the anode current collector, and the anode film layer includes an anode active material.

The anode current collector may be a conventional metal foil or a composite current collector (a composite current collector may be formed by disposing a metal material on a polymer base material). As an example, the anode current collector may be an aluminum foil.

A specific type of the anode active material is not limited, and an active material which can be used for an anode of a secondary battery known in the art may be used, and those skilled in the art may select the material according to practical requirements.

As an example, the anode active material may include, but is not limited to, one or more of a lithium transition metal oxide, a lithium-containing phosphate of an olivine structure, and their respective modified compounds. Examples of the lithium transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and their respective modified compounds thereof. Examples of the lithium-containing phosphate of olivine structure may include, but are not limited to, one or more of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, and their respective modified compounds thereof. These materials are all commercially available.

The modified compounds of each material may be a compound of the material subjected to doping modification and/or surface coating modification.

The anode film layer generally more optionally includes a binder, a conductive agent, and other optional auxiliaries.

As an example, the conductive agent may include one or more of superconducting carbon, acetylene black, carbon black, ketjen black, carbon dots, carbon nanotubes, graphene, and carbon nanofibers.

As an example, the binder may be one or more of styrene-butadiene rubber (SBR), waterbased acrylic resin, polyvinylidene fluoride (PVDF), polytetrafluoroethylene (PTFE), an ethylene-vinyl acetate copolymer (EVA), polyacrylic acid (PAA), carboxymethylcellulose (CMC), polyvinyl alcohol (PVA), and polyvinyl butyral (PVB).

### [Cathode plate]

In the secondary battery, the cathode plate generally includes a cathode current collector and a cathode film layer disposed on the cathode current collector, and the cathode film layer includes a cathode active material.

The cathode current collector may be a conventional metal foil or a composite current collector (for example, a metal material may be disposed on a polymer substrate to form a composite current collector). As an example, the cathode current collector may be a copper foil.

A specific type of the cathode active material is not limited, and an active material which can be used for a cathode of a secondary battery known in the art may be used, and those skilled in the art may select the material according to practical requirements. As an example, the cathode active material may include, but is not limited to, one or more of artificial graphite, natural graphite, hard carbon, soft carbon, a silicon-based material, or a tin-based material. The silicon-based material may be selected from one or more of elemental silicon, a silicon-oxygen compound (for example, silicon monoxide), a silicon-carbon composite, a silicon-nitrogen composite, and a silicon alloy. The tin-based material may include one or more of elemental tin, a tin oxide compound, or a tin alloy. These materials are all commercially available.

In some embodiments, to further increase the energy density of the battery, the cathode active material may include a silicon-based material.

The cathode film layer typically further optionally includes a binder, a conductive agent, and other optional auxiliaries.

As an example, the conductive agent may include one or more of superconducting carbon, acetylene black, carbon black, ketjen black, carbon dots, carbon nanotubes, graphene, and carbon nanofibers.

As an example, the binder may be one or more of styrene-butadiene rubber (SBR), waterbased acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional auxiliaries may be thickening and dispersing agents (for example, carboxymethylcellulose sodium, CMC-Na), PTC thermistor materials.

### [Electrolyte]

The secondary battery may include an electrolyte, which plays a role of conducting ions between the anode and the cathode. The electrolyte may include an electrolyte salt and a solvent.

As an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalate phosphate (LiDFOP), and lithium tetrafluorooxalate phosphate (LiTFOP).

As an example, the solvent may be selected from one or more of ethylene carbonate (EC), propylene carbonate (PC), methyl ethyl carbonate (EMC), diethyl carbonate (DEC), dimethyl carbonate (DMC), Dipropyl Carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), n-propyl acetate (PA), methyl propionate (MP), ethyl propionate (EP), n-propyl propionate (PP), methyl butyrate (MB), ethyl butyrate (EB), 1,4-butyrolactone (GBL), tetramethylene sulfone (SF), methyl sulfone (MSM), methyl ethyl sulfone (EMS), and diethyl sulfone (ESE).

In some embodiments, the electrolyte further includes an additive. For example, the additive may include a cathode film-forming additive or an anode film-forming additive, and may further include an additive capable of improving specific performance of a battery, for example, an additive for improving overcharge performance of a battery, an additive for improving high-temperature, and an additive for improving low-temperature performance of a battery.

In some embodiments, the secondary battery may be a lithium-ion secondary battery. When the porous coating 13 is located between the first porous base film 11 and the second porous base film 12, the binder 14 may play a role in bonding the first porous base film 11 and the second porous base film 12, and moreover, the depth of the at least part of the filler particles 15 embedded into the first porous base film 11 and/or the second porous base film 12 is greater than or equal to 1 µm, which increases the bonding force between the porous coating 13 and the first porous base film 11 and the second porous base film 12 and improves the reliability of the secondary battery.

The shape of the secondary battery is not limited in the present application, and may be a cylindrical shape, a square shape, or any other shape. For example, FIG. 2 illustrates a square secondary battery 5 as an example.

In some embodiments, the secondary battery may include an outer package. The outer package is used to package an anode plate, a cathode plate, and an electrolyte.

In some embodiments, the outer package of the secondary battery may be a hard case, such as a hard plastic case, an aluminum case, a steel case, and the like. The outer package of the secondary battery may also be a pouch, such as a bag-type pouch. The material of the pouch may be plastic, for example, may include one or more of polypropylene (PP), polybutylene terephthalate (PBT), and polybutylene succinate (PBS).

In some embodiments, referring to FIG. 3, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover on the opening to close the accommodating chamber.

A method for manufacturing the secondary battery of the present application is well known. In some embodiments, the anode plate, the separator 10, the cathode plate, and the electrolyte may be assembled to form a secondary battery. As an example, the anode plate, the separator 10, and the cathode plate may be formed into an electrode assembly by a winding process and/or a lamination process, the electrode assembly is placed in the outer package, and an electrolyte is then injected after drying, followed by steps such as sealing, standing, battery formation, and shaping, to obtain a battery cell. The plurality of battery cells may be further connected in series or in parallel or parallel-series connected to form a battery module. A plurality of battery modules may also be connected in series or in parallel or parallel-series connected to form a battery pack. In some embodiments, the plurality of battery cells may also directly form a battery pack.

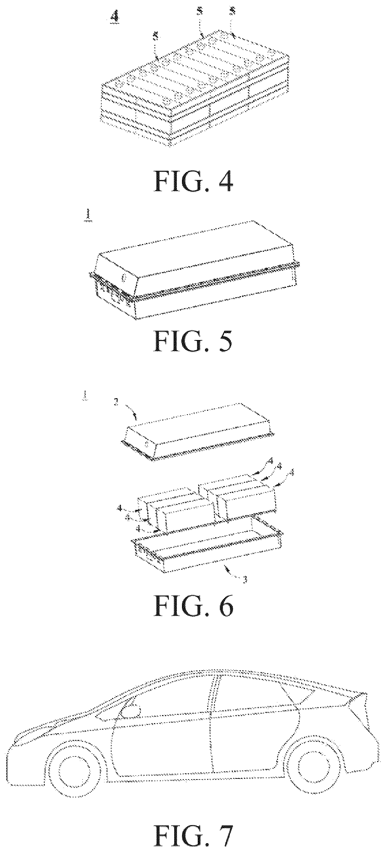

FIG. 4 shows a battery module 4 as an example. Referring to FIG. 4, in the battery module 4, a plurality of secondary batteries 5 may be arranged in series in the longitudinal direction of the battery module 4. It is appreciated that the secondary batteries may alternatively be arranged in any other manner. Further, the plurality of secondary batteries 5 may be fixed by fasteners.

The battery module 4 may further include a housing with an accommodating space. The plurality of secondary batteries 5 are accommodated in the accommodating space.

In some embodiments, the above battery module may be further assembled into a battery pack. The number of battery modules contained in the battery pack may be adjusted according to the application and capacity of the battery pack.

FIG. 5 and FIG. 6 show a battery pack 1 as an example. Referring to FIG. 5 and FIG. 6, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery box.

### [Electric device]

The present application further provides an electric device, including the secondary battery provided in the present application. The battery cell, the battery module or the battery pack may be used as a power supply or an energy storage unit of the electric device. The electric device may include, but is not limited to, mobile equipment (for example, a cell phone or a notebook computer), an electric vehicle (for example, a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

For the electric device, the battery cell, the battery module or the battery pack may be selected according to its use requirements.

FIG. 7 shows an electric device as an example. The electric device is a pure electric vehicle, a hybrid electric vehicle, or a plug-in hybrid electric vehicle. In order to meet the demand for high power and high energy density of the secondary battery by the electric device, a battery pack or a battery module may be used.

As another example, the electric device may be a mobile phone, a tablet computer, or a notebook computer. The electrical device is usually light and thin, and may use a battery as a power supply.

The beneficial effects of the present application are further illustrated with reference to the following embodiments.

In order to make the technical problems, technical solutions, and advantageous effects solved by the embodiments of the present application clearer, the following will be further described in detail with reference to the embodiments and the accompanying drawings. Apparently, the described embodiments are only a part of the embodiments of the present application, and not all of the embodiments. The following description of at least one exemplary embodiment is merely illustrative in nature and is in no way intended as any limitation on the application and its applications. All other embodiments obtained by those of ordinary skill in the art based on the embodiments of the present application without making creative efforts shall fall within the scope of the present application.

### I. Preparation of separator

### Separator 1:

(1) a first porous base film and a second porous base film were provided, where the first porous base film was polypropylene (PP) and the second porous base film was polyethylene (PE); the melting point of the second porous base film is 165°C, and the melting point of the second porous base film is 135°C; the porosity of the first porous base film was 55%, and the porosity of the second porous base film was 35%; and the average pore diameter of the pore structure of the first porous base film was 0.15 µm, and the average pore diameter of the second porous base film was 0.12 µm.
(2) preparation of a coating slurry: a binder polyacrylate, filler particles aluminum oxide, and carboxymethyl cellulose were uniformly mixed in an appropriate amount of a solvent deionized water at a ratio of 1: 4: 1 to prepare a coating slurry. The volume average particle diameter Dv50 of the filler particles was 0.3 µm.
(3) The above coating slurry was coated on one surface of the PE-based film to form a porous coating, and dried in an oven for 8 s; PP and PE-based films were subjected to hot press molding, where a hot press temperature was 45°C, a hot pressing pressure was 10N and a hot pressing time was 5 s, so that the porous coating formed a separator between the PP-based film and the PE-based film. The embedding depth of the aluminum oxide particles in the first porous base film PP was 1.2 µm, and the embedding depth of the aluminum oxide particles in the second porous base film PE was 1.1 µm.

The preparation methods of the separators 2-12 are similar to that of the separator 1, and the difference lies in that one or more of the average pore diameter of the base film or the hot pressing process are adjusted, as shown in Table 1. Other production methods are the same as the preparation method for the separator 1.

The separator 1 prepared by the above method is subjected to relevant performance tests, and the specific results are shown in Table 1.

### II. Preparation of battery

### Example 1

### 1. Preparation of an anode plate

An anode active material LiNi_{0.8}Co_{0.1}Mn_{0.1}O₂ (NCM811), a conductive agent carbon black (SuperP), and a binder polyvinylidene fluoride (PVDF) were uniformly mixed in an appropriate amount of a solvent N-methyl pyrrolidone (NMP) a at a mass ratio of 96.2: 2.7: 1.1 to obtain an anode slurry, and the anode slurry was coated to an anode current collector aluminum foil, and subjected to drying, cold pressing, slitting, and cutting processes to obtain an anode plate.

### 2. Preparation of a cathode plate

A cathode active material artificial graphite, a conductive agent carbon black (SuperP), a binder styrene-butadiene rubber (SBR), and sodium carboxymethyl cellulose (CMC-Na) were uniformly mixed in an appropriate amount of a solvent deionized water at a mass ratio of 96.4: 0.7: 1.8: 1.1 to obtain a cathode slurry, and the cathode slurry was coated to a cathode current collector copper foil, and subjected to drying, cold pressing, slitting, and cutting to obtain a cathode plate.

### 3. Separator

The separator is the above prepared separator 1.

### 4. Preparation of an electrolyte

Ethylene carbonate (EC) and ethyl methyl carbonate (EMC) were mixed at a mass ratio of 30: 70 to obtain an organic solvent, and a sufficiently dried electrolyte salt LiPF₆ (the concentration of the electrolyte salt was 1.0 mol/L) was dissolved in the mixed organic solvent, and they were uniformly mixed to obtain the electrolyte.

### 5. Preparation of a secondary battery

The anode plate, the separator, and the cathode plate were stacked in order such that the separator was located between the anode plate and the cathode plate to play a separating role, and then the they were wound to obtain an electrode assembly; and the electrode assembly was placed into an outer package, the above prepared electrolyte was injected into the dried secondary battery, and subjected to vacuum sealing, standing, chemical formation, and shaping to obtain the secondary battery.

The methods for preparing the secondary batteries in Examples 2-10 and Comparative examples 1-2 are similar to the method for preparing the secondary battery in Example 1 but the difference lies in that different separators are used (separators 1-10 are used in Examples 1-10 and separators 11-12 are used in Comparative examples 1-2), specifically shown in Table 1.

### III. Battery performance test

### 1. Transverse heat shrinkage test at 250°C:

Sample preparation: the above prepared separator was punched with a punch into a sample having a width of 50 mm and a length of 100 mm, 5 parallel samples were taken and placed on A4 paper and fixed, and the A4 paper containing the sample was placed on corrugated paper having a thickness of 1 mm to 5 mm.

Sample testing: A4 paper placed on the corrugated paper was placed in a blast oven with the blast oven temperature set to 250°C. After the temperature reached the set temperature and was stabilized for 30 min, timing was started, and after the set time (for example, 1 h) was reached, the width of the separator was measured, and the value was marked as b.

Transverse (TD) heat shrinkage ratio=[(50-b) / 50]×100%, and the average value of 5 parallel samples was taken as the test result.

### 2. Nail penetration test

Test of nail penetration at 25°C and under a condition that the battery was 100%SOC: a heat insulated pad, a penetration battery cell, a heat insulated pad, a battery cell to be tested, and a heat insulated pad were placed in sequence, a high-temperature-resistant temperature sensing wire was connected, water cycle was started in advance, and when the temperature of most part of the battery cell was stabilized at 25°C, water cycle was continued for more than 10 min, a φ3mm high-temperature-resistant steel needle was aligned with the center position of a heat source to penetrate at a needle penetration speed of 0.01 mm/s till the battery cells failed (the instrument displayed fluctuation or sudden reduction of the voltage), and the time was recorded; the penetrated battery cell referred to the battery cells which had been penetrated, used as the heat source.

**Table 1 Test results of battery performance in Examples and Comparative examples**

| No. | | | Example 1 | Example 2 | Example 3 | Example 4 | Example 5 | Example 6 | Example 7 | Example 8 | Example 9 | Example 10 | Comparative example 1 | Comparative example 2 |
|---|---|---|---|---|---|---|---|---|---|---|---|---|---|---|
| Separator structure | First porous base film | Substance | PP | PP | PP | PP | PP | PP | PTFE | PVF | PET | PTFE | PP | PP |
| | | Average pore diameter (µm) | 0.15 | 0.18 | 0.25 | 0.25 | 0.35 | 0.18 | 0.35 | 0.35 | 0.35 | 0.35 | 0.15 | 0.1 |
| | Second porous base film | Substance | PE | PE | PE | PP | PP | PP | PP | PE | PE | PE | PE | PE |
| | | Average pore diameter (µm) | 0.12 | 0.12 | 0.12 | 0.22 | 0.3 | 0.15 | 0.32 | 0.27 | 0.25 | 0.22 | 0.12 | 0.12 |
| | Porous coating | Volume average particle diameter Dv50 (µm) of filler particles | 0.3 | 0.3 | 0.3 | 0.5 | 0.5 | 0.5 | 0.5 | 0.5 | 0.5 | 0.5 | 0.3 | 0.3 |
| Separator compounding process | Hot pressing pressure (N) | | 10 | 10 | 10 | 20 | 20 | 20 | 10 | 10 | 10 | 10 | 0 | 3 |
| | Hot pressing time (S) | | 5 | 5 | 5 | 3 | 3 | 3 | 3 | 5 | 3 | 3 | 0 | 1 |
| | Oven temperature (°C) | | 45 | 45 | 45 | 45 | 45 | 45 | 45 | 45 | 45 | 45 | 0 | 0 |
| | Oven drying time (S) | | 8 | 8 | 8 | 8 | 8 | 8 | 8 | 8 | 8 | 8 | 0 | 0 |
| Separator product | Embedding depth D1 (µm) in the first porous base film | | 1.2 | 1.4 | 1.8 | 1.8 | 2.8 | 1.5 | 2.8 | 2.8 | 2.8 | 2.8 | 0.8 | 0.85 |
| | Embedding depth D2 in second porous base film | | 1.1 | 1.1 | 1.2 | 1.4 | 2.1 | 1.1 | 2.2 | 1.9 | 1.8 | 1.5 | 0.75 | 0.95 |
| | D1/D2 | | 1.09 | 1.27 | 1.50 | 1.29 | 1.33 | 1.36 | 1.27 | 1.47 | 1.56 | 1.87 | 1.07 | 0.89 |
| | Transverse heat shrinkage ratio (%) at 250°C | | 2.1 | 1.9 | 1.5 | 1.8 | 1.5 | 1.2 | 1.5 | 1.1 | 0.9 | 0.8 | 4.3 | 3.8 |
| Battery performance test | Nail penetration test (min) | | 38 | 49 | 40 | 42 | 45 | 46 | 44 | 48 | 49 | 52 | 25 | 24 |

As can be seen from Table 1, Examples 1-10 and Comparative examples 1-2 are analyzed. In Examples 1-10, the depth of the filler particles embedded in the first porous base film and/or the second porous base film is greater than or equal to 1 µm, so that both the heat resistance performance of the separator and the nail penetration test performance of the battery are effectively improved, and thus, the reliable performance of the secondary battery is effectively improved.

The above description is only a specific embodiment of the present application, but the scope of the present application is not limited thereto, and any one skilled in the art may easily conceive of various equivalent modifications or replacements within the scope disclosed in the present application, and these modifications or replacements are all included in the scope of the present application. Therefore, the scope of the present application should be subject to the scope of claims.

## Claims

1. A separator, comprising:
a first porous base film;
a second porous base film; and
a porous coating disposed between the first porous base film and the second porous base film, wherein the porous coating comprises a binder and filler particles, and an embedding depth of at least part of the filler particles in the first porous base film is greater than or equal to 1 µm and/or an embedding depth of at least part of the filler particles in the second porous base film is greater than or equal to 1 µm.

2. The separator according to claim 1, wherein a melting point of the first porous base film is higher than a melting point of the second porous base film, and the embedding depth of the filler particles in the first porous base film is greater than the embedding depth of the filler particles in the second porous base film.

3. The separator according to claim 1 or 2, wherein the embedding depth of the filler particles in the first porous base film is denoted by D1, the embedding depth of the filler particles in the second porous base film is denoted by D2, and the separator satisfies 1.01≤D1/D2≤3, optionally 1.05≤D1/D2≤2.

4. The separator according to any one of claims 1 to 3, wherein
the embedding depth of the filler particles in the first porous base film is greater than or equal to 1.5 µm, optionally 2.0-4.5 µm; and/or
the embedding depth of the filler particles in the second porous base film is greater than or equal to 1.1 µm, optionally 1.1-3.5 µm.

5. The separator according to any one of claims 1 to 4, wherein an average pore diameter of the first porous base film is 0.1-2 µm, optionally 0.1-0.5 µm; and/or an average pore diameter of the second porous base film is 0.1-2 µm, optionally 0.1-0.35 µm.

6. The separator according to any one of claims 1 to 5, wherein a volume average particle diameter Dv50 of the filler particles is 0.2-1.2µm, optionally 0.3-0.8µm.

7. The separator according to any one of claims 1 to 6, wherein a ratio of a porosity of the first porous base film to a porosity of the second porous base film is 1.01-3.5, optionally 1.1-2.0.

8. The separator according to any one of claims 1 to 7, wherein
the porosity of the first porous base film is 40-80%, optionally 40-70%; and/or
the porosity of the second porous base film is 20-50%, optionally 25-35%.

9. The separator according to any one of claims 1 to 8, wherein
the melting point of the first porous base film is 160°C-380°C, optionally 165°C-330°C, and/or the melting point of the second porous base film is 100°C-250°C, optionally 130°C-210°C.

10. The separator according to any one of claims 1 to 9, wherein the binder comprises one or more of polyacrylate, acrylic acid, carboxymethyl cellulose, a polyvinylidene fluoride-co-trichloroethylene copolymer, polymethyl methacrylate, polyvinyl pyrrolidone, polyvinyl acetate, a polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, and cyanoethyl amylopectin.

11. The separator according to any one of claims 1 to 10, wherein the filler particles comprise at least one of inorganic particles, organic particles, and an organic-metal framework material.

12. The separator according to any one of claims 1 to 11, wherein the separator satisfies at least one of the following items (1) to (3):
(1) a peel strength between the first porous base film and the porous coating is ≥5 N/m, optionally 5.5-10 N/m;
(2) a horizontal heat shrinkage ratio of the separator at 250°C for 1 h is ≤1.5%, optionally ≤1.0%; and
(3) a longitudinal heat shrinkage ratio of the separator at 250°C for 1 h is ≤1.5%, optionally ≤1.0%.

13. A method for preparing a separator, comprising the following steps:
providing a first porous base film and a second porous base film;
preparing a porous coating slurry, which comprises a binder and filler particles, and disposing the porous coating slurry on a surface of the first porous base film and/or a surface of the second porous base film to form a porous coating; and
compounding the first porous base film and the second porous base film by a lamination process, so that the porous coating is disposed between the first porous base film and the second porous base film to obtain the separator, wherein an embedding depth of at least part of the filler particles in the first porous base film is greater than or equal to 1 µm and/or an embedding depth of at least part of the filler particles in the second porous base film is greater than or equal to 1 µm.

14. The method according to claim 13, wherein in the lamination process, a lamination temperature is 30°C-70°C, optionally 35°C-50°C; and/or
a lamination pressure is 2-30N, optionally 5-20N.

15. A secondary battery, comprising the separator according to any one of claims 1 to 12 or the separator prepared by the method for preparing a separator according to claim 13 or 14.

16. The secondary battery according to claim 15, further comprising an anode plate and a cathode plate, wherein the separator is disposed between the anode plate and the cathode plate.

17. An electric device, comprising the secondary battery according to claim 15 or 16.
